# EUROPÄISCHE PATENTSCHRIFT

(11) **EP 2 922 737 B1**
(45) Veröffentlichungstag und Bekanntmachung des Hinweises auf die Patenterteilung: **31.01.2018**
(21) Anmeldenummer: 13814424.1
(22) Anmeldetag: 19.11.2013
(51) Int. Cl.: B60W 50/029

(54) **VERFAHREN FÜR EINE FAHRERASSISTENZANWENDUNG**
METHOD FOR A DRIVER ASSISTANCE APPLICATION
PROCEDE POUR UNE APPLICATION D'AIDE A LA CONDUITE

(30) Priorität: 20.11.2012 DE 102012111156; 07.12.2012 DE 102012111991
(43) Veröffentlichungstag der Anmeldung: 30.09.2015
(73) Patentinhaber: Conti Temic microelectronic GmbH, 90411 Nürnberg (DE)
(72) Erfinder: GREWE, Ralph, 88131 Lindau (DE); HEGEMANN, Stefan, 88239 Wangen (DE); FISCHER, Marc, 88149 Nonnenhorn (DE); ADOMAT, Rolf, 88097 Eriskirch (DE)
(86) Internationale Anmeldenummer: PCT/DE2013/200307
(87) Internationale Veröffentlichungsnummer: WO 2014/079440

(56) Entgegenhaltungen:
- EP-A2- 1 227 007
- EP-A2- 1 616 746
- WO-A1-2006/002695
- US-A1- 2008 054 716

## Beschreibung

Fahrerassistenzsysteme wie z.B. adaptiver Tempomat (ACC), Überholassistent, Spurverlassenswarnsysteme, Systeme zur Verkehrszeichenerkennung oder Lichtsteuerung und autonome Bremssysteme sind Bestandteil moderner Fahrzeuge.
Bei den derzeit zugelassenen Systemen befindet sich der Fahrer immer im Regelkreis, d.h. der Fahrer muss aufmerksam bleiben und beim Versagen der Fahrerassistenzfunktion sofort eingreifen. Dies kann ihm z.B. durch ein Warnsignal angezeigt werden. Zukünftig sollen auch Funktionen für ein automatisiertes Fahren angeboten werden, d.h. das Fahrerassistenzsystem muss auch bei einem Fehler (z.B. Sensorausfall) das Fahrzeug für eine vorgegeben Zeitdauer sicher führen können. In diesem Fall oder falls der Fahrer nach einer Übernahmeanforderung nicht sofort reagiert, muss zumindest eine reduzierte Fahrerassistenzfunktion zur Verfügung gestellt werden, bis der Fahrer übernimmt oder das Fahrerassistenzsystem wieder voll funktionsfähig ist.

Die Offenlegungsschrift EP 1616746 A2 gibt ein System zur Kontrolle eines Fahrzeugs gemäß dem Oberbegriff von Anspruch 1 an. Dazu werden die Daten einer Mehrzahl von Sensoren ausgewertet und es wird eine Einschätzung zur Umfeldsituation erstellt. Auf den Sensordaten basierend werden Aktuatoren zur Fahrzeugkontrolle, z.B. zur Steuerung des Motors, der Bremsen oder der Lenkung, angesteuert. Das System umfasst eine Master-Kontrolleinheit und je eine Slave-Kontrolleinheit im Sensor und Aktuator. Im Regelbetrieb empfängt die Master-Kontrolleinheit ein Eingangssignal von zumindest einer Sensoreinheit und gibt ein Steuersignal an einen Aktuator aus. Sollte dieses Steuersignal ausfallen, gibt die Sensor Slave-Kontrolleinheit ein Signal direkt an die Aktuator-Kontrolleinheit aus. Basierend darauf wird von der Aktuator-Kontrolleinheit der Aktuator angesteuert.
Es ist die Aufgabe der hier vorliegenden Erfindung ein Fahrerassistenzsystem mit verbesserter Ausfallsicherheit anzugeben.

Diese Aufgabe wird gemäß der Merkmale der unabhängigen Ansprüche gelöst.

Erfindungsgemäß wird ein Verfahren für eine Fahrerassistenzsystem angegeben. Das Fahrerassistenzsystem umfasst zumindest eine Sensoreinheit (S1, S2, ..Sx) zur Umfelderfassung, die z.B. als Radar-, Lidar- und/oder Kamerasensor ausgebildet sind. Weiterhin umfasst das Fahrerassistenzsystem eine erste zentrale Steuereinheit (SE1) mit Mitteln zur Berechnung eines Umfeldmodells (5) mit einer hohen Genauigkeit. Das Umfeldmodell basiert auf den Daten der zumindest einen Sensoreinheit, vorzugsweise ist eine Mehrzahl von gleichartigen und/oder verschiedenartigen Sensoreinheiten (S1, S2, ..Sx) vorgesehen, die gleiche oder verschiedene Erfassungsbereiche haben.
Weiterhin ist die erste zentrale Steuereinheit zur Berechnung einer Regelgröße für eine Fahrerassistenzanwendung, wie z.B. ein Spurhaltesystem, und zur Ausgabe eines ersten Steuersignals (3) für eine Aktuatorregelung (6), z.B. für die Fahrzeuglenkung, gemäß der berechneten Regelgröße ausgelegt. Es ist eine zweite Steuereinheit (SE2) vorgesehen, die umfasst Mittel zur Berechnung einer zweiten Regelgröße basierend auf Daten von der zumindest einen Sensoreinheit (S1, S2, ..Sx) für eine reduzierte Fahrerassistenzanwendung (RF, RF1, RF2) und zur Ausgabe eines zweiten Steuersignals (4, 4a, 4b) an die Aktuatorregelung (6). Weiterhin umfasst das Fahrerassistenzsystem einen Aktuator mit einer Aktuatorsteuereinheit. Die zweite Steuereinheit ist insbesondere Bestandteil einer Sensoreinheit (S1, S2, ..Sx) oder einer Aktuatorsteuereinheit.
In dem Fall, dass das erste Steuersignal (3) nicht zur Verfügung steht, wird für eine Ansteuerung des Aktuators
- das zweite Steuersignal (4, 4a, 4b) benutzt oder
- basierend auf dem oder den letzten ausgegebenen ersten Steuersignal(en) (3) und dem zweiten Steuersignal (4, 4a, 4b) wird ein drittes Steuersignal zur Ansteuerung des Aktuators berechnet oder
- das von der ersten Steuereinheit berechnete Umfeldmodell zur zweiten Steuereinheit (SE2) übertragen und darauf basierend ein zweites Steuersignal (4) für eine reduzierte Fahrerassistenzanwendung berechnet. Insbesondere kann das übertragene Umfeldmodell mit aktuellen Daten der zumindest einen Sensoreinheit (S1, S2, ..Sx) aktualisiert werden.

In einer bevorzugten Ausgestaltung der Erfindung werden für die Berechnung der zweiten Regelgröße (4, 4a, 4b) für die reduzierten Fahrerassistenzanwendung (RF, RF1, RF2) im Vergleich zur Berechnung der Regelgröße für die Anwendung in der ersten Steuereinheit (SE1) weniger Regelfälle berücksichtigt. Insbesondere werden nur dann Regeleingriffe durchgeführt, wenn z.B. eine Kolllision unvermeidbar ist oder das Fahrzeug die Fahrspur zu verlassen droht.
Vorzugsweise werden für die reduzierte Fahrerassistenzanwendung (RF, RF1, RF2) keine Regeleingriffe für Komfortanforderungen ausgeführt. Komfortanforderungen umfassen z.B. Vermeidung von abrupten Übergängen bei der Regelung der Längsgeschwindigkeit durch ein limitierte Beschleunigung oder die Vermeidung von schnellen, mehrfachen Wechsel zwischen zwei Regelungszuständen z.B. ein schwingender Lenkungsregler.

Vorzugsweise wird die Berechnung einer Regelgröße für eine reduzierte Fahrerassistenzanwendung (4, 4a, 4b) in einer Aktuatorsteuereinheit zumindest zweifach durchgeführt, wobei entweder Daten unterschiedlicher Sensoreinheiten und/oder unterschiedliche Berechnungsverfahren (Algorithmen) benutzt werden und basierend auf den zumindest zwei zweiten Regelgrößen ein Steuersignal für den Aktuator berechnet wird.

In einer positiven Ausgestaltung der Erfindung umfasst die zumindest eine Sensoreinheit (S1, S2, ..Sx) Mittel zur Vorverarbeitung von Sensordaten. Insbesondere umfasst die Vorverarbeitung eine Objekt- oder Freiraumdetektion. Die Sensordaten werden nach der Vorverarbeitung an die erste Steuereinheit (SE1) und ganz oder teiweise an die zweite Steuereinheit (SE2) ausgegeben.

Vorzugsweise werden für die Vorverarbeitung in einer Sensoreinheit Objekt- oder Freirauminformationen nach einem ersten und einem zweiten unterschiedlichen Verfahren (AL1, AL2, AL3, AL4) berechnet. Für eine Verwendung in einem Umfeldmodell in der ersten Steuereinheit werden die redundant erzeugten Informationen plausibilisiert (7) und für die Verwendung in einer zweiten Steuereinheit (SE2) für eine reduzierte Fahrerassistenzanwendung (RF, RF1, RF2) werden nur Informationen basierend auf einem der beiden Verfahren (z.B. AL1 und nicht AL2) verwendet. Insbesondere ist eines der Verfahren (AL1, AL4) für die reduzierte Fahrerassistenzanwendung (RF, RF1, RF2) optimiert.

Weiterhin wird ein Fahrerassistenzsystem beansprucht, das zumindest eine Sensoreinheit (S1, S2, ..Sx) zur Umfelderfassung, z.B. ein Radar-, Lidar und/oder Kamerasensorsystem, und eine erste Steuereinheit (SE1) mit Mitteln
- zur Berechnung eines Umfeldmodells (5) mit einer hohen Genauigkeit basierend auf Daten von der zumindest einen Sensoreinheit (S1, S2, ..Sx) und
- zur Berechnung einer Regelgröße für eine Fahrerassistenzanwendung und
- zur Ausgabe eines ersten Steuersignals (3) gemäß der berechneten Regelgröße umfasst. Es ist eine zweite Steuereinheit (SE2) vorgesehen, die umfasst Mittel zur Berechnung einer zweiten Regelgröße basierend auf Daten von der zumindest einen Sensoreinheit (S1, S2, ..Sx) für eine reduzierte Fahrerassistenzanwendung (RF, RF1, RF2) und zur Ausgabe eines zweiten Steuersignals (4, 4a, 4b) an die Aktuatorregelung (6). Weiterhin umfasst das Fahrerassistenzsystem einen Aktuator mit einer Aktuatorsteuereinheit. Die zweite Steuereinheit ist insbesondere Bestandteil einer Sensoreinheit (S1, S2, ..Sx) oder einer Aktuatorsteuereinheit. Das Fahrerassistenzsystem umfasst weiterhin Mittel zur Berechnung und Ausgabe des Ansteuersignals für einen Aktuator gemäß dem unabhängen Verfahrensanspruch.

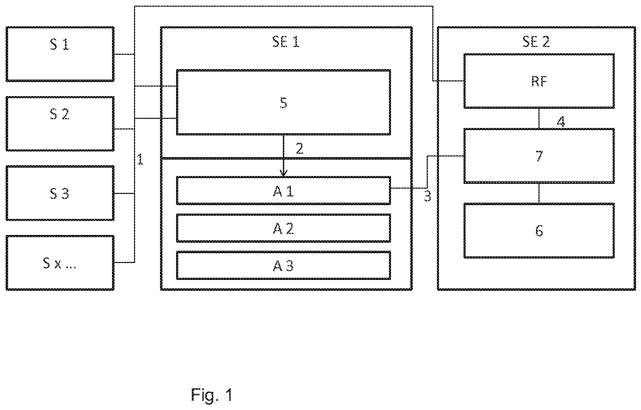

Nachfolgend wird die Erfindung anhand von Ausführungsbeispielen und Figuren näher erläutert.
Eine bevorzugte Ausgestaltung der Erfindung ist in Figur 1 dargestellt. In den Sensoreinheiten S1 ,S2, S3, Sx wird eine Vorverarbeitung der Daten durchgeführt, z.B. wird ein Objekt und/oder ein Freiraum erkannt. Ein Freiraum ist ein Gebiet, das aktuell für das Fahrzeug befahrbar ist, z.B. ein Fahrbahnabschnitt ohne Hindernisse. Diese Daten 1 werden an eine erste Steuereinheit ausgegeben. Die erste Steuereinheit SE1 ist in diesem Ausführungsbeispiel die zentrale Steuereinheit für Fahrerassistenzfunktionen (ADAS-ECU). Hier wird unter Verwendung rechenintensiver Algorithmen ein Abbild des Fahrzeugumfeldes mit hoher Auflösung, das Umfeldmodell, berechnet. Das Umfeldmodell kann z.B. als Belegungsgitter ausgestaltet sein in dem die Objektdaten von Umgebungsobjekten fusioniert von verschiedenen Sensoreinheiten abgelegt werden. Die Daten 2 des Umfeldmodells 5 werden den Fahrerassistenzanwendung A1, A2, Ax zur Verfügung gestellt, die daraus eine Regelgröße 3 für einen Aktuator, z.B. für Bremse, Motorsteuerung und Lenkung, ableiten. Der Aktuator wiederum verfügt über ein eigenes Steuergerät, welches üblicherweise über ein hohes ASIL Level verfügt. Die Berechnung des Umgebungsmodells 5 und der Fahrerassistenzanwendung A1, A2, Ax A sind dabei auf hohen Komfort optimiert, wofür auch ein erhöhter Ressourcenverbrauch bezüglich der Rechenzeit in Kauf genommen wird.

Um nun ohne ein zweites leistungsstarkes und teureres Steuergerät einen redundanten Pfad zu schaffen, werden die Sensordaten 1 zusätzlich ganz oder teilweise an die Steuereinheit des Aktuators SE2 ausgegeben. Hier ist eine reduzierte Form einer Fahrerassistenzanwendung hinterlegt, die daraus eine Regelgröße 4 ableiten. Die reduzierte Fahrerassistenzanwendung ist eine Minimalversion der Fahrerassistenzanwendung, die möglichst ressourceneffizient und ohne Berücksichtigung von Komfortanforderungen die zweite Regelgröße 4 berechnet.
Im Falle eines Ausfalls der ersten Steuereinheit SE1 steht so weiterhin eine zweite Regelgröße 4 zur Verfügung, die zur Überbrückung des Zeitraums bis zur Übernahme durch den Fahrer oder bis zur Wiederherstellung der vollen Funktionsfähigkeit der ersten Steuereinheit dienen kann. Der eingeschränkte Komfort der reduzierten Fahrerassistenzanwendung, z.B. ein schwingender Lenkungsregler, kann dabei als zusätzliche Warnung an den Fahrer dienen, damit dieser die Fahrzeugführung übernimmt.

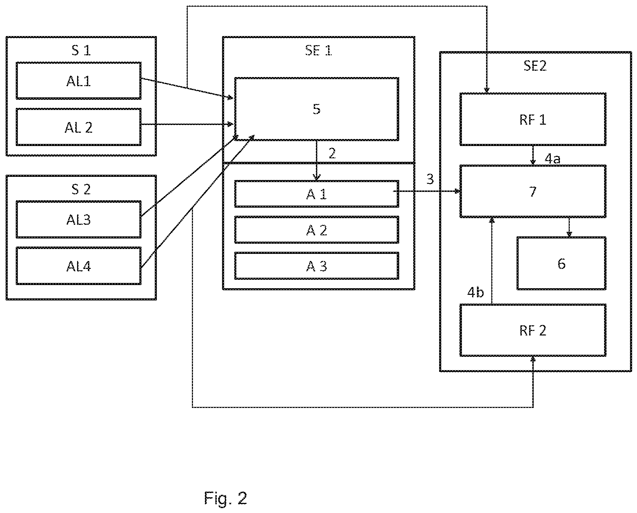

In einem weiteren Ausführungsbeispiel ist die Berechnung einer Mehrzahl von reduzierten Fahrerassistenzanwendungen in der zweiten Steuereinheit SE2 vorgesehen. In Figur 2 ist dieser Fall beispielhaft mit zwei reduzierte Fahrerassistenzanwendungen RF1 und RF2 dargestellt. Diese können auf den Daten eines einzelnen Sensors oder auf Daten verschiedener Sensoren oder auch auf fusionierten Daten mehrerer Sensoreinheiten beruhen. Die ausgegebenen Regelgrößen 4a und 4b werden plausibilisiert. Falls die Regelgrößen 4a und 4b nicht plausibilisiert werden können, kann z.B jeder Regelgröße 4a, 4b ein Konfidenzwert zugeordnet werden und diejenige mit dem höheren Konfidenzwert zur Aktuatorsteuerung ausgewählt werden. Die Algorithmen der reduzierten Fahrerassistenzanwendungen RF1 und RF 2 können sich vorzugsweise sowohl untereinander als auch von denen der Hauptanwendung in der ersten Steuereinheit unterscheiden, um systematische Fehler bei der Auswertung der Sensordaten erkennen zu können.

Eine positive Ausgestaltung der Erfindung sieht vor, dass um eine beschränkte Zeit nach einem Ausfall der ersten Steuereinheit SE1 zu überbrücken, die Regelgröße 3 der ersten Steuereinheit SE1 für eine Plausibilisierung bzw. Fehlerstrategie im Aktuator weiter zu verarbeiten. In Kombination mit der Regelgröße 4 oder den Regelgrößen 4a, 4b der reduzierten Fahrerassistenzanwendungen RF1, RF2 steht so für einen beschränkten Zeitraum eine weitere Informationsquelle zur Verfügung.

In einer bevorzugten Ausgestaltung der Erfindung wird das Umfeldmodell an die zweite Steuereinheit SE2 übertragen und für eine vorgegebene Zeit gespeichert. im Fall eines Ausfalls der ersten Steuereinheit SE1 kann auf den gespeicherten Daten noch eine gewisse Zeit mit einer reduzierten Fahrerassistenzfunktion weiter gearbeitet werden. Die von den Sensoreinheiten S1, S2, S3, Sx direkt gelieferten Daten können diese Historie ergänzen und somit noch eine etwas längere Überbrückungszeit ermöglichen.

Vorzugsweise ist vorgesehen, um systematische Fehler durch Algorithmen weiter auszuschließen, in den Sensoreinheiten mehrere verschiedene Verfahren AL1 und AL2 oder AL3 und AL4 parallel laufen zu lassen, z.B. für eine Freiraumdetektion. Das ist schematisch in Figur 2 dargestellt. Die Ergebnisse beider Verfahren können untereinander Plausibilisiert werden, bevor sie fusioniert werden. Desweiteren kann eine der Sensorausgaben besonders für eine reduzierte Fahrerassistenzanwendung RF1, RF 2 optimiert sein. In Figur 2 sind dies die Verfahren AL 1 und AL 4 . Werden AL2 und 3 in der ersten Steuereinheit SE1 für die Anwendungen A1, A2, Ax verwendet, kann somit über die reduzierte Fahrerassistenzanwendung RF ein komplett verschiedener Pfad bis zur Regelvorgabe realisiert werden. Um für das Gesamtsystem Kosten zu sparen, kann dieser Pfad dabei statt auf Komfort auf Recheneffizienz optimiert sein.

## Patentansprüche

1. Verfahren für ein Fahrerassistenzsystem umfassend
i) zumindest einen Sensoreinheit zur Umfelderfassung
ii) eine erste Steuereinheit mit Mitteln
- zur Berechnung eines Umfeldmodells mit einer hohen Genauigkeit basierend auf Daten von der zumindest einen Sensoreinheit und
- zur Berechnung einer Regelgröße für eine Fahrerassistenzanwendung und
- zur Ausgabe eines ersten Steuersignals für einen Aktuator gemäß der berechneten Regelgröße
iii) ein Aktuator mit einer Aktuatorsteuereinheit
iv) eine zweite Steuereinheit (SE2) zur Berechnung einer zweiten Regelgröße für eine reduzierte Fahrerassistenzanwendung und eines zweiten Steuersignals für den Aktuator basierend auf Daten von der zumindest einen Sensoreinheit umfasst, wobei die zweite Steuereinheit in der Sensoreinheit oder in der Aktuatoreinheit angeordnet ist,
**dadurch gekennzeichnet, dass**
wobei für eine Ansteuerung des Aktuators in dem Fall, dass das erste Steuersignal nicht zur Verfügung steht, ein drittes Steuersignal (7) bestimmt wird, wobei
- der Wert des zweiten Steuersignals (4) für das dritte Steuersignal (7) übernommen wird oder
- basierend auf dem oder den letzten ausgegebenen ersten Steuersignal(en) und dem zweiten Steuersignal ein drittes Steuersignal zur Ansteuerung des Aktuators berechnet wird (7) oder
- das von der ersten Steuereinheit berechnete Umfeldmodell zur zweiten Steuereinheit übertragen wird und darauf basierend ein drittes Steuersignal (7) berechnet wird.

2. Verfahren nach Anspruch 1, **dadurch gekennzeichnet, dass** für die Berechnung der zweiten Regelgröße für die reduzierten Fahrerassistenzanwendung im Vergleich zur Berechnung der Regelgröße für die Anwendung in der ersten Steuereinheit weniger Rechenzeit benötigt wird, da weniger Regelfälle berücksichtigt werden.

3. Verfahren nach dem vorherigen Anspruch,
**dadurch gekennzeichnet, dass**
für die reduzierte Fahrerassistenzanwendung keine Komfortanforderungen umfasst

4. Verfahren nach einem der vorherigen Ansprüche,
**dadurch gekennzeichnet, dass**
die Berechnung einer Regelgröße für eine reduzierte Fahrerassistenzanwendung in einer Aktuatorsteuereinheit zumindest zweifach durchgeführt wird, wobei entweder Daten unterschiedlicher Sensoreinheiten und/oder unterschiedliche Berechnungsverfahren (Algorithmen) benutzt werden und basierend auf den zumindest zwei zweiten Regelgrößen ein Steuersignal für den Aktuator berechnet wird.

5. Verfahren zur Aktuatoransteuerung nach einem der vorherigen Ansprüche,
**dadurch gekennzeichnet, dass**
die zumindest eine Sensoreinheit Mittel zur Vorverarbeitung von Sensordaten umfasst, insbesondere umfasst die Vorverarbeitung eine Objekt- oder Freiraumdetektion und die Sensordaten nach der Vorverarbeitung an die erste Steuereinheit und die Aktorsteuereinheit ausgegeben werden.

6. Verfahren nach nach dem vorherigen Anspruch,
**dadurch gekennzeichnet, dass**
für die Vorverarbeitung einer Sensoreinheit Objekt- oder Freirauminformationen nach einem ersten und einem zweiten unterschiedlichen Verfahren berechnet werden und für eine Verwendung in der ersten Steuereinheit die redundant erzeugten Informationen plausibilisiert und danach weiter verarbeitet werden und für die Verwendung in einer Aktuatorsteuereinheit nur Informationen basierend auf einem der beiden Verfahren verwendet werden.

7. Fahrerassistenzsystem umfassend
i) zumindest einen Sensoreinheit zur Umfelderfassung
ii) eine erste Steuereinheit mit Mitteln
- zur Berechnung eines Umfeldmodells mit einer hohen Genauigkeit basierend auf Daten von der zumindest einen Sensoreinheit und
- zur Berechnung einer Regelgröße für eine Fahrerassistenzanwendung und
- zur Ausgabe eines ersten Steuersignals für einen Aktuator gemäß der berechneten Regelgröße
iii) ein Aktuator mit einer Aktuatorsteuereinheit
iv) eine zweite Steuereinheit (SE2) zur Berechnung einer zweiten Regelgröße für eine reduzierte Fahrerassistenzanwendung und eines zweiten Steuersignals für den Aktuator basierend auf Daten von der zumindest einen Sensoreinheit umfasst, wobei die zweite Steuereinheit in der Sensoreinheit oder in der Aktuatoreinheit angeordnet ist,
v) Mittel zur Berechnung und Ausgabe des Ansteuersignals für einen Aktuator gemäß dem Verfahren nach Anspruch 1.

## Claims

1. A method for a driver assistance system, including
i) at least one sensor unit for detecting the surroundings
ii) a first control unit with means
- for calculating a surroundings model with a high degree of precision based on data from the at least one sensor unit, and
- for calculating a control variable for a driver assistance application, and
- for outputting a first control signal for an actuator in accordance with the calculated control variable
iii) an actuator with an actuator control unit
iv) a second control unit (SE2) for calculating a second control variable for a reduced driver assistance application and a second control signal for the actuator based on data from the at least one sensor unit, wherein the second control unit is arranged in the sensor unit or in the actuator unit,
**characterized in that**
- a third control signal (7) is determined for triggering the actuator in the event that the first control signal is not available, wherein
- the value of the second control signal (4) is adopted for the third control signal (7), or
- a third control signal (7) for triggering the actuator is calculated based on the last output first control signal(s) and the second control signal, or
- the surroundings model calculated by the first control unit is transmitted to the second control unit and a third control signal (7) is calculated based on said model.

2. The method according to Claim 1, **characterized in that** less computing time is needed for calculating the second control variable for the reduced driver assistance application compared with calculating the control variable for the application in the first control unit because fewer control cases are considered.

3. The method according to the preceding claim,
**characterized in that**
the reduced driver assistance application does not comprise any comfort requirements.

4. The method according to any one of the preceding claims,
**characterized in that**
the calculation of a control variable for a reduced driver assistance application is performed in an actuator control unit at least twice, wherein either data from different sensor units and/or different calculation methods (algorithms) are used, and a control signal for the actuator is calculated based on the at least two second control variables.

5. A method for triggering an actuator according to any one of the preceding claims,
**characterized in that**
the at least one sensor unit includes means for preprocessing sensor data, said preprocessing particularly including object or free space detection, and that the sensor data is output to the first control unit and the actuator control unit following the preprocessing.

6. The method according to the preceding claim,
**characterized in that**
for the preprocessing of a sensor unit, object or free space information is calculated in accordance with a first method and a different second method, the redundantly generated information is then checked for plausibility for use in the first control unit, then further processed, and only information based on one of the two methods is used in an actuator control unit.

7. A driver assistance system, including
i) at least one sensor unit for detecting the surroundings
ii) a first control unit with means
- for calculating a surroundings model with a high degree of precision based on data from the at least one sensor unit, and
- for calculating a control variable for a driver assistance application, and
- for outputting a first control signal for an actuator in accordance with the calculated control variable
iii) an actuator with an actuator control unit
iv) a second control unit (SE2) for calculating a second control variable for a reduced driver assistance application and a second control signal for the actuator based on data from the at least one sensor unit, wherein the second control unit is arranged in the sensor unit or in the actuator unit,
v) means for calculating and outputting the trigger signal for an actuator in accordance with the method according to Claim 1.

## Revendications

1. Procédé pour un système d'assistance au conducteur comprenant
i)au moins une unité de capteur pour la détection de l'environnement
ii) une première unité de commande avec des moyens
- pour le calcul d'un modèle d'environnement avec une précision élevée s'appuyant sur des données de l'au moins une unité de capteur et
- pour le calcul d'une grandeur réglée pour une application d'assistance au conducteur et
- pour la sortie d'un premier signal de commande pour un actionneur conformément à la grandeur réglée calculée
iii) un actionneur avec une unité de commande d'actionneur
iv) une deuxième unité de commande (SE2) pour le calcul d'une deuxième grandeur réglée pour une application d'assistance au conducteur réduite et d'un deuxième signal de commande pour l'actionneur s'appuyant sur des données de l'au moins une unité de capteur, la deuxième unité de commande étant disposée dans l'unité de capteur ou dans l'unité d'actionneur,
**caractérisé en ce que**
pour une excitation de l'actionneur dans le cas où le premier signal de commande n'est pas disponible, un troisième signal de commande (7) est déterminé,
- la valeur du deuxième signal de commande (4) est reprise pour le troisième signal de commande (7) ou
- basé sur le premier, ou les premiers, signal/signaux sorti(s) en dernier et sur le deuxième signal de commande, un troisième signal de commande est calculé (7) pour l'excitation de l'actionneur ou
- le modèle d'environnement calculé par la première unité de commande est transmis à la deuxième unité de commande et un troisième signal de commande (7) est calculé sur cette base.

2. Procédé selon la revendication 1, **caractérisé en ce que**, pour le calcul de la deuxième grandeur réglée pour l'application d'assistance au conducteur réduite, moins de temps de calcul est nécessaire comparativement au calcul de la grandeur réglée pour l'application dans la première unité de commande, puisque moins de cas de réglage sont pris en compte.

3. Procédé selon la revendication précédente, **caractérisé en ce que** l'application d'assistance au conducteur réduite ne comprend aucune exigence de confort.

4. Procédé selon l'une des revendications précédentes,
**caractérisé en ce que**
le calcul d'une grandeur réglée pour une application d'assistance au conducteur réduite dans une unité de commande d'actionneur est exécutée au moins deux fois, des données d'unités de capteur différentes et/ou des procédés de calcul différents (algorithmes) étant utilisés et un signal de commande étant calculé pour l'actionneur en s'appuyant sur les au moins deux deuxièmes grandeurs réglées.

5. Procédé pour l'excitation d'actionneur selon l'une des revendications précédentes,
**caractérisé en ce que**
l'au moins une unité de capteur comprend des moyens pour le prétraitement de données de capteur, le prétraitement comprend en particulier une détection d'objet ou d'espace vide et les données de capteur sont transmises à la première unité de commande et à l'unité d'actionneur après le prétraitement.

6. Procédé selon la revendication précédente,
**caractérisé en ce que**,
pour le prétraitement d'une unité de capteur, des informations d'objet ou d'espace vide sont calculées d'après un premier et un deuxième procédés différents et, pour l'utilisation dans la première unité de commande, la plausibilité des informations générées de façon redondantes est vérifiée, et lesdites informations sont ensuite soumises à un traitement supplémentaire et, pour l'utilisation dans une unité de commande d'actionneur, uniquement des informations basées sur l'un des deux procédés sont utilisées.

7. Système d'assistance au conducteur, comprenant
i) au moins une unité de capteur pour la détection de l'environnement
ii) une première unité de commande avec des moyens
- pour le calcul d'un modèle d'environnement avec une précision élevée s'appuyant sur des données de l'au moins une unité de capteur et
- pour le calcul d'une grandeur réglée pour une application d'assistance au conducteur et
- pour la sortie d'un premier signal de commande pour un actionneur conformément à la grandeur réglée calculée
iii) un actionneur avec une unité de commande d'actionneur
iv) une deuxième unité de commande (SE2) pour le calcul d'une deuxième grandeur réglée pour une application d'assistance au conducteur réduite et d'un deuxième signal de commande pour l'actionneur s'appuyant sur des données de l'au moins une unité de capteur, la deuxième unité de commande étant disposée dans l'unité de capteur ou dans l'unité d'actionneur,
v) des moyens pour le calcul et la sortie du signal d'excitation pour un actionneur conformément au procédé selon la revendication 1.
